(19) Europäisches Patentamt
European Patent Office
Office européen des brevets

(11) **EP 3 924 422 B1**

(12) **EUROPEAN PATENT SPECIFICATION**

(45) Date of publication and mention
of the grant of the patent:
**21.05.2025 Bulletin 2025/21**

(21) Application number: **20705562.5**

(22) Date of filing: **16.01.2020**

(51) International Patent Classification (IPC):
***C08L 23/08*** *(2025.01)* ***H01B 7/04*** *(2006.01)*

(52) Cooperative Patent Classification (CPC):
(C-Sets available)
**H01B 3/441; C08L 23/0815;** C08L 2203/202;
H01B 7/04 (Cont.)

(86) International application number:
**PCT/US2020/013879**

(87) International publication number:
**WO 2020/167409 (20.08.2020 Gazette 2020/34)**

(54) **POLYMERIC COMPOSITIONS FOR CABLE JACKETS**

POLYMERZUSAMMENSETZUNGEN FÜR KABELMÄNTEL

COMPOSITIONS POLYMÈRES POUR GAINES DE CÂBLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.02.2019 US 201962804468 P**

(43) Date of publication of application:
**22.12.2021 Bulletin 2021/51**

(73) Proprietor: **Dow Global Technologies LLC
Midland, MI 48674 (US)**

(72) Inventors:
• SAUNDERS, Madelaine E.
**Collegeville, Pennsylvania 19426 (US)**
• BRIGANDI, Paul J.
**Collegeville, Pennsylvania 19426 (US)**

(74) Representative: **Boult Wade Tennant LLP
Salisbury Square House
8 Salisbury Square
London EC4Y 8AP (GB)**

(56) References cited:
US-A1- 2010 084 158    US-A1- 2010 319 960
US-A1- 2014 367 144

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 23/0815, C08L 53/02**

**Description**

FIELD

Various embodiments of the present disclosure relate to polymeric compositions comprising an ethylene-based polymer and an olefin block copolymer and methods for their production. Other aspects concern polymeric compositions suitable for use in cable jackets.

INTRODUCTION

Thermoplastic polymeric compositions are known for use in wire-and-cable jacket applications. Current thermoplastic compounds have good physical properties but can lack the required flexibility for some specific applications. Typically, flexibility can be improved but often at the expense of other physical properties, such as tensile strength and elongation at break. Improvements are needed for compositions having improved flexibility with retained mechanical properties.

SUMMARY

One embodiment is a cable comprising:(a) a conductor; and(b) an outer jacket,wherein the outer jacket is at least partially formed from a polymeric composition,wherein the polymeric composition comprises a polymer component and optionally one or more additives, wherein the polymer component consists of:(i) an ethylene-based polymer selected from a low-density polyethylene, a linear-low-density polyethylene, or combinations thereof, and(ii) an olefin block copolymer, wherein the olefin block copolymer has a melt index (I2) in the range of from 0.5 to 1.5 g/10 min. as measured in accordance with ASTM D1238, condition 190 °C/2.16 kg, a tensile elongation of greater than 370%, and a tensile strength greater than 600 psi,wherein the polymer component has a tensile elasticity (G') of less than 1,200 MPa whenmeasured at -40 °C using the method as described in the description,wherein the polymer component has a tensile elasticity (G') of less than 400 MPa whenmeasured at 20 °C using the method as described in the description,wherein the polymer component has a tensile strength greater than 1,000 psi measured using ASTM D638 and type IV dogbone-shaped samples,wherein the polymer component has an elongation at break greater than 800 % measured using ASTM D638 and type IV dogbone-shaped samples; and wherein the ethylene-based polymer constitutes from 50 to 70 weight percent of the polymer component, wherein the olefin block copolymer constitutes from 30 to 50 weight percent of the polymer component.

DETAILED DESCRIPTION

Various embodiments of the present disclosure concern a polymeric composition suitable for use as a cable jacket. The polymeric composition comprises a polymer component and optionally one or more additives. The polymer component consists of (a) an ethylene-based polymer selected from a low-density polyethylene, a linear-low-density polyethylene, and combinations thereof, and (b) an olefin block copolymer.

*Ethylene-based Polymer*

As noted above, the polymer component of the polymeric composition contains an ethylene-based polymer. As used herein, "ethylene-based" polymers are polymers prepared from ethylene monomers as the primary (i.e., greater than 50 weight percent ("wt%")) monomer component, though other co-monomers may also be employed. "Polymer" means a macromolecular compound prepared by reacting (i.e., polymerizing) monomers of the same or different type, and includes homopolymers and interpolymers. "Interpolymer" means a polymer prepared by the polymerization of at least two different monomer types. This generic term includes copolymers (usually employed to refer to polymers prepared from two different monomer types), and polymers prepared from more than two different monomer types (e.g., terpolymers (three different monomer types) and quaterpolymers (four different monomer types)).

In an embodiment, the ethylene-based polymer can be a low-density polyethylene ("LDPE"). LDPEs are generally highly branched ethylene homopolymers, and can be prepared via high pressure processes (i.e., HP-LDPE). LDPEs suitable for use herein can have a density ranging from 0.91 to 0.94 $g/cm^3$. In various embodiments, the ethylene-based polymer is a highpressure LDPE having a density of at least 0.91 $g/cm^3$, but less than 0.94 $g/cm^3$, or less than 0.93 $g/cm^3$. In an embodiment, the LDPE can have a density in the range of from 0.915 to 0.925 $g/cm^3$, or a density of about 0.92 $g/cm^3$. Polymer densities provided herein are determined according to ASTM International ("ASTM") method D792. LDPEs suitable for use herein can have a melt index ($I_2$) of less than 20 g/10 min., or ranging from 0.1 to 10 g/10 min., from 0.1 to 5 g/10min., from 0.1 to 1 g/10 min., or an $I_2$ of about 0.25 g/10 min. Melt indices provided herein are determined according to ASTM method D1238. Unless otherwise noted, melt indices are determined at 190 °C and 2.16 Kg (i.e., $I_2$).

Generally, LDPEs have a broad molecular weight distribution ("MWD") resulting in a relatively high polydispersity index ("PDI;" ratio of weight-average molecular weight to number-average molecular weight).

In an embodiment, the ethylene-based polymer can be a linear-low-density polyethylene ("LLDPE"). LLDPEs are generally ethylene-based polymers having a heterogeneous distribution of comonomer (e.g., $\alpha$-olefin monomer), and are characterized by short-chain branching. For example, LLDPEs can be copolymers of ethylene and $\alpha$-olefin monomers, such as 1-butene, 1-hexene, or 1-octene. LLDPEs suitable for use herein can have a density ranging from 0.915 to 0.925 g/cm$^3$, or a density of about 0.92 g/cm$^3$. LLDPEs suitable for use herein can have a melt index ($I_2$) ranging from 0.1 to 20 g/10 min., from 0.1 to 5 g/10 min., from 0.1 to 1 g/10 min., or from 0.5 to 1 g/10 min., or an $I_2$ of about 0.7 g/10 min.

Production processes used for preparing ethylene-based polymers are wide, varied, and known in the art. Any conventional or hereafter discovered production process for producing ethylene-based polymers having the properties described above may be employed for preparing the ethylene-based polymers described herein. In general, polymerization can be accomplished at conditions known in the art for Ziegler-Natta or Kaminsky-Sinn type polymerization reactions, that is, at temperatures from 0 to 250 °C, or 30 or 200 °C, and pressures from atmospheric to 10,000 atmospheres (1,013 megaPascal ("MPa")). In most polymerization reactions, the molar ratio of catalyst to polymerizable compounds employed is from 10-12:1 to 10-1:1, or from 10-9:1 to 10-5:1.

The ethylene-based polymer can be a combination of LDPE and LLDPE.

Examples of suitable commercially available ethylene-based polymers include, but are not limited to, DOW™ 132I, an LDPE commercially available from The Dow Chemical Company, and DFDA-7530 NT, an LLDPE commercially available from The Dow Chemical Company, Midland, MI, USA.

The ethylene-based polymer constitutes from 50 to 70 wt%, of the polymer component, based on the total weight of the polymer component. In some embodiments, the ethylene-based polymer constitutes about 50 wt% of the polymer component.

*Olefin Block Copolymer*

As noted above, the polymer component of the polymeric composition also contains an olefin block copolymer. As used herein, the terms "ethylene/$\alpha$-olefin block copolymer," "olefin block copolymer," or "OBC" are used interchangeably and mean an ethylene/$\alpha$-olefin multi-block copolymer, and includes ethylene and one or more copolymerizable $\alpha$-olefin comonomer in polymerized form, characterized by multiple blocks or segments of two or more polymerized monomer units differing in chemical or physical properties. The terms "interpolymer" and "copolymer" are used interchangeably, herein, for the term ethylene/$\alpha$-olefin block copolymer, and similar terms discussed in this paragraph. When referring to amounts of "ethylene" or "comonomer" in the copolymer, it is understood that this means polymerized units thereof. In some embodiments, the multi-block copolymer can be represented by the following formula:

$$(AB)_n$$

where n is at least 1, preferably an integer greater than 1, such as 2, 3, 4, 5, 10, 15, 20, 30, 40, 50, 60, 70, 80, 90, 100, or higher, "A" represents a hard block or segment and "B" represents a soft block or segment. Preferably, A's and B's are linked in a substantially linear fashion, as opposed to a substantially branched or substantially star-shaped fashion. In other embodiments, A blocks and B blocks are randomly distributed along the polymer chain. In other words, the block copolymers usually do not have a structure as follows.

AAA-AA-BBB-BB

In still other embodiments, the block copolymers do not usually have a third type of block, which comprises different comonomer(s). In yet other embodiments, each of block A and block B has monomers or comonomers substantially randomly distributed within the block. In other words, neither block A nor block B comprises two or more sub-segments (or sub-blocks) of distinct composition, such as a tip segment, which has a substantially different composition than the rest of the block.

Preferably, ethylene comprises the majority mole fraction of the whole block copolymer, i.e., ethylene comprises at least 50 mole percent of the whole polymer. More preferably ethylene comprises at least 60 mole percent, at least 70 mole percent, or at least 80 mole percent, with the substantial remainder of the whole polymer comprising at least one other comonomer that is preferably an $\alpha$-olefin having 3 or more carbon atoms. In some embodiments, the olefin block copolymer may comprise 50 mol% to 90 mol% ethylene, preferably 60 mol% to 85 mol%, more preferably 65 mol% to 80 mol%. For many ethylene/octene block copolymers, the preferred composition comprises an ethylene content greater than 80 mole percent of the whole polymer and an octene content of from 10 to 15, preferably from 15 to 20 mole percent of the whole polymer.

The olefin block copolymer includes various amounts of "hard" and "soft" segments. "Hard" segments are blocks of polymerized units, in which ethylene is present in an amount greater than 95 weight percent, or greater than 98 weight percent, based on the weight of the polymer, up to 100 weight percent. In other words, the comonomer content (content of monomers other than ethylene) in the hard segments is less than 5 weight percent, or less than 2 weight percent based on the weight of the polymer, and can be as low as zero. In some embodiments, the hard segments include all, or substantially all, units derived from ethylene. "Soft" segments are blocks of polymerized units in which the comonomer content (content of monomers other than ethylene) is greater than 5 weight percent, or greater than 8 weight percent, greater than 10 weight percent, or greater than 15 weight percent based on the weight of the polymer. In some embodiments, the comonomer content in the soft segments can be greater than 20 weight percent, greater than 25 weight percent, greater than 30 weight percent, greater than 35 weight percent, greater than 40 weight percent, greater than 45 weight percent, greater than 50 weight percent, or greater than 60 weight percent, and can be up to 100 weight percent.

The soft segments can be present in an OBC from 1 weight percent to 99 weight percent of the total weight of the OBC, or from 5 weight percent to 95 weight percent, from 10 weight percent to 90 weight percent, from 15 weight percent to 85 weight percent, from 20 weight percent to 80 weight percent, from 25 weight percent to 75 weight percent, from 30 weight percent to 70 weight percent, from 35 weight percent to 65 weight percent, from 40 weight percent to 60 weight percent, or from 45 weight percent to 55 weight percent of the total weight of the OBC. Conversely, the hard segments can be present in similar ranges. The soft segment weight percentage and the hard segment weight percentage can be calculated based on data obtained from DSC or NMR. Such methods and calculations are disclosed in, for example, U.S. Patent No. 7,608,668, entitled "Ethylene/$\alpha$-Olefin Block Interpolymers," filed on March 15, 2006, in the name of Colin L. P. Shan, Lonnie Hazlitt, et al., and assigned to Dow Global Technologies Inc.

In particular, hard and soft segment weight percentages and comonomer content may be determined as described in Column 57 to Column 63 of US 7,608,668.

The olefin block copolymer is a polymer comprising two or more chemically distinct regions or segments (referred to as "blocks") preferably joined in a linear manner, that is, a polymer comprising chemically differentiated units, which are joined end-to-end with respect to polymerized ethylenic functionality, rather than in pendent or grafted fashion. In an embodiment, the blocks differ in the amount or type of incorporated comonomer, density, amount of crystallinity, crystallite size attributable to a polymer of such composition, type or degree of tacticity (isotactic or syndiotactic), regio-regularity or regio-irregularity, amount of branching (including long chain branching or hyper-branching), homogeneity or any other chemical or physical property. Compared to block interpolymers of the prior art, including interpolymers produced by sequential monomer addition, fluxional catalysts, or anionic polymerization techniques, the present OBC is characterized by unique distributions of both polymer polydispersity (PDI or Mw/Mn or MWD), block length distribution, and/or block number distribution, due, in an embodiment, to the effect of the shuttling agent(s) in combination with multiple catalysts used in their preparation.

In an embodiment, the OBC is produced in a continuous process and possesses a polydispersity index, PDI (or MWD), from 1.7 to 3.5, or from 1.8 to 3, or from 1.8 to 2.5, or from 1.8 to 2.2. When produced in a batch or semi-batch process, the OBC possesses PDI from 1.0 to 3.5, or from 1.3 to 3, or from 1.4 to 2.5, or from 1.4 to 2.

In addition, the olefin block copolymer possesses a PDI fitting a Schultz-Flory distribution rather than a Poisson distribution. The present OBC has both a polydisperse block distribution as well as a polydisperse distribution of block sizes. This results in the formation of polymer products having improved and distinguishable physical properties.

In an embodiment, the present olefin block copolymer possesses a most probable distribution of block lengths. In an embodiment, the olefin block copolymer is defined as having:

(A) Mw/Mn from 1.7 to 3.5, at least one melting point, Tm, in degrees Celsius, and a density, d, in grams/cubic centimeter, where in the numerical values of Tm and d correspond to the relationship:

$$Tm > -2002.9 + 4538.5(d) - 2422.2(d)^2,$$

and/or

(B) Mw/Mn from 1.7 to 3.5, and is characterized by a heat of fusion, $\Delta H$ in J/g, and a delta quantity, $\Delta T$, in degrees Celsius, defined as the temperature difference between the tallest DSC peak and the tallest Crystallization Analysis Fractionation ("CRYSTAF") peak, wherein the numerical values of $\Delta T$ and $\Delta H$ have the following relationships:

$$\Delta T > -0.1299 \, \Delta H + 62.81$$

for $\Delta H$ greater than zero and up to 130 J/g

$$\Delta T \geq 48°C$$

for $\Delta H$ greater than 130 J/g

wherein the CRYSTAF peak is determined using at least 5 percent of the cumulative polymer, and if less than 5 percent of the polymer has an identifiable CRYSTAF peak, then the CRYSTAF temperature is 30°C; and/or

(C) elastic recovery, Re, in percent at 300 percent strain and 1 cycle measured with a compression-molded film of the ethylene/α-olefin interpolymer, and has a density, d, in grams/cubic centimeter, wherein the numerical values of Re and d satisfy the following relationship when ethylene/α-olefin interpolymer is substantially free of crosslinked phase:

$$Re > 1481 - 1629(d);$$

and/or

(D) has a molecular fraction which elutes between 40°C and 130°C when fractionated using TREF, characterized in that the fraction has a molar comonomer content greater than, or equal to, the quantity (- 0.2013) T + 20.07, more preferably greater than or equal to the quantity (-0.2013) T+ 21.07, where T is the numerical value of the peak elution temperature of the TREF fraction, measured in °C; and/or,

(E) has a storage modulus at 25°C, G'(25°C), and a storage modulus at 100°C, G'(100°C), wherein the ratio of G'(25°C) to G'(100°C) is in the range of 1:1 to 9:1.

The olefin block copolymer may also have:

(F) a molecular fraction which elutes between 40°C and 130°C when fractionated using TREF, characterized in that the fraction has a block index of at least 0.5 and up to 1, and a molecular weight distribution, Mw/Mn, greater than 1.3; and/or

(G) average block index greater than zero and up to 1.0 and a molecular weight distribution, Mw/Mn greater than 1.3.

It is understood that the olefin block copolymer may have one, some, all, or any combination of properties (A)-(G). Block Index can be determined as described in detail in US Patent No. 7,608,668. Analytical methods for determining properties (A) through (G) are disclosed in, for example, US Patent No 7,608,668, Col. 31, line 26 through Col. 35, line 44.

Suitable monomers for use in preparing the present OBC include ethylene and one or more addition polymerizable monomers other than ethylene. Examples of suitable comonomers include straight-chain or branched α-olefins of 3 to 30, preferably 3 to 20, carbon atoms, such as propylene, 1-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1-octadecene and 1-eicosene; cycloolefins of 3 to 30, preferably 3 to 20, carbon atoms, such as cyclopentene, cycloheptene, norbornene, 5-methyl-2-norbornene, tetracyclododecene, and 2-methyl-1,4,5,8-dimethano-1,2,3,4,4a,5,8,8a-octahydronaphthalene; di-and polyolefins, such as butadiene, isoprene, 4-methyl-1,3-pentadiene, 1,3-pentadiene, 1,4-pentadiene, 1,5-hexadiene, 1,4-hexadiene, 1,3-hexadiene, 1,3-octadiene, 1,4-octadiene, 1,5-octadiene, 1,6-octadiene, 1,7-octadiene, ethylidenenorbornene, vinyl norbornene, dicyclopentadiene, 7-methyl-1,6-octadiene, 4-ethylidene-8-methyl-1,7-nonadiene, and 5,9-dimethyl-1,4,8-decatriene; and 3-phenylpropene, 4-phenylpropene, 1,2-difluoroethylene, tetrafluoroethylene, and 3,3,3-trifluoro-1-propene.

In one embodiment, the ethylene/α-olefin block copolymer has a density of from 0.850 g/cc to 0.900 g/cc, or from 0.855 g/cc to 0.890 g/cc or from 0.860 g/cc to 0.880 g/cc. In one embodiment, the ethylene/α-olefin block copolymer has a Shore A value of 40 to 70, preferably from 45 to 65 and more preferably from 50 to 65. In one embodiment, the ethylene/α-olefin block copolymer has a melt index (MI) from 0.1 g/10 min to 50 g/10 min, or from 0.3 g/10 min to 30 g/10 min, from 0.5 g/10 min to 20 g/10 min, from 0.5 to 10 g/10 min., from 0.5 to 1.5 g/10 min., or from 0.75 to 1.25 g/10 min. In one embodiment, the ethylene/α-olefin block copolymer comprises polymerized ethylene and one α-olefin as the only monomer types. In a further embodiment, the α-olefin is selected from propylene, 1-butene, 1-hexene or 1-octene.

In an embodiment, the ethylene/α-olefin block copolymer excludes styrene.

In an embodiment, the ethylene/α-olefin block copolymer is an ethylene/octene block copolymer.

The ethylene/α-olefin block copolymers can be produced via a chain shuttling process, such as described in US Patent No. 7,858,706. In particular, suitable chain shuttling agents and related information are listed in Col. 16, line 39, through Col. 19, line 44. Suitable catalysts are described in Col. 19, line 45, through Col. 46, line 19, and suitable co-catalysts in Col. 46, line 20, through Col. 51 line 28. The process is described throughout the document, but particularly in Col. Col 51, line 29, through Col. 54, line 56. The process is also described, for example, in the following: US Patent Nos. 7,608,668; US 7,893,166; and US 7,947,793.

The ethylene/α-olefin block copolymer may comprise a combination or two or more embodiments described herein.

The olefin block copolymer has a melt index ($I_2$) in the range of from 0.5 to 1.5 g/10 min., a tensile elongation of greater than 370 %, and a tensile strength greater than 600 psi.

Examples of suitable olefin block copolymers include those commercially available under the trade name INFUSE™ from The Dow Chemical Company, Midland, MI, USA). An example of a specific commercially available olefin block copolymer suitable for use herein includes, but is not limited to, INFUSE™ 9107, available from The Dow Chemical Company, Midland, MI, USA.

The olefin block copolymer constitutes from 30 to 50 wt%, of the polymer component, based on the total weight of the polymer component. In some embodiments, the olefin block copolymer constitutes about 50 wt% of the polymer component.

*Polymer Component*

The polymer component consisting of the ethylene-based polymer and the olefin block copolymer can have a certain balance of properties.

The polymer component has a tensile elasticity (G') of less than 1,200 MPa when measured at -40 °C, a tensile elasticity (G') of less than 400 MPa when measured at 20 °C, a tensile strength greater than 1,000 psi, and an elongation at break greater than 800 %. All mechanical properties of the polymer component are measured according to the methods provided in the Test Methods section, below.

In one or more embodiments, the polymer component can have a tensile elasticity (G') of less than 1,100 MPa when measured at -40 °C, a tensile elasticity (G') of less than 300 MPa when measured at 20 °C, a tensile strength greater than 1,200 psi, and an elongation at break greater than 820 %.

In one or more embodiments, the polymer component can have a tensile elasticity (G') of less than 1,000 MPa when measured at -40 °C, a tensile elasticity (G') of less than 200 MPa when measured at 20 °C, a tensile strength greater than 1,400 psi, and an elongation at break greater than 850 %.

In one or more embodiments, the polymer component can have a tensile elasticity (G') of less than 900 MPa when measured at -40 °C, a tensile elasticity (G') of less than 150 MPa when measured at 20 °C, a tensile strength greater than 1,500 psi, and an elongation at break greater than 900 %.

*Additives*

The polymeric composition can optionally contain a non-conductive carbon black, such as those commonly used in cable jackets. The carbon black component can be compounded with the polymer component, as described above, either neat or as part of a pre-mixed masterbatch. In various embodiments, the amount of a carbon black in the polymeric composition can be greater than zero (>0), typically from 1, more typically from 2, to 3, wt%, based on the total weight of the polymeric composition. All individual values and subranges from >0 to 3 wt% are included and disclosed herein, for example from 2 to 3 wt%.

Non-limiting examples of conventional carbon blacks include the grades described by ASTM N550, N472, N351, N110 and N660, Ketjen blacks, furnace blacks and acetylene blacks. Other non-limiting examples of suitable carbon blacks include those sold under the tradenames BLACK PEARLS®, CSX®, ELFTEX®, MOGUL®, MONARCH®, REGAL® and VULCAN®, available from Cabot.

The polymeric composition can optionally contain one or more antioxidants. Non-limiting examples of suitable antioxidants include phenolic antioxidants, thio-based antioxidants, phosphate-based antioxidants, and hydrazine-based metal deactivators. Antioxidants may be present in the polymeric composition in an amount ranging from greater than zero to 5 wt%, from 0.1 to 3 wt%, or from 0.1 to 1 wt%, based on the entire weight of the polymeric composition.

The polymeric composition can optionally contain one or more additional additives, which are generally added in conventional amounts, either neat or as part of a masterbatch. Such additives include, but are not limited to, flame retardants, processing aids, fillers, pigments or colorants, coupling agents, ultraviolet stabilizers (including UV absorbers), tackifiers, antistatic agents, plasticizers, lubricants, viscosity control agents, anti-blocking agents, surfactants, extender oils, acid scavengers, metal deactivators, and the like.

Non-limiting examples of flame retardants include, but are not limited to, aluminum hydroxide and magnesium hydroxide.

Non-limiting examples of processing aids include, but are not limited to, fatty amides such as stearamide, oleamide, erucamide, or N,N' ethylene bis-stearamide; polyethylene wax; oxidized polyethylene wax; polymers of ethylene oxide; copolymers of ethylene oxide and propylene oxide; vegetable waxes; petroleum waxes; non-ionic surfactants; silicone fluids; polysiloxanes; and fluoroelastomers such as Viton® available from DuPont Performance Elastomers LLC, or Dynamar™ available from Dyneon LLC.

Non-limiting examples of fillers include, but are not limited to, various flame retardants, clays, precipitated silica and silicates, fumed silica, metal sulfides and sulfates (e.g., molybdenum disulfide and barium sulfate), metal borates (e.g., barium borate and zinc borate), metal anhydrides (e.g., aluminum anhydride), and ground minerals. If present, fillers are generally added in conventional amounts, e.g., from 5 wt% or less to 50 or more wt% based on the weight of the composition.

*Compounding*

The polymeric composition comprising the polymer component and optional additives can be prepared by any suitable method. For example, the additives (e.g., carbon black, fillers, etc.) can be added to a melt containing the ethylene-based polymer and the olefin block copolymer. Compounding of the components can be performed by blending, for example, using an internal batch mixer such as a Banbury or Bolling internal mixer. Alternatively, continuous single or twin screw mixers can be used, such as a Farrel continuous mixer, a Werner and Pfleiderer twin screw mixer, or a Buss kneading continuous extruder.

The additives can be introduced into the polymer component alone (neat) or as a pre-mixed masterbatch. Such masterbatches are commonly formed by dispersing the additives into an inert plastic resin, such as LDPE or LLDPE. Masterbatches are conveniently formed by melt compounding methods.

*Polymeric Composition*

The resulting polymeric composition can have certain properties an exclusions.

In various embodiments, the polymeric composition, and the polymer component specifically, is free of propylene-based polymers. As used herein, a propylene-based polymer is any polymer prepared from a majority, by weight, of propylene monomer.

In various embodiments, the polymeric composition is thermoplastic. As such, the polymeric composition can be substantially free of crosslinking.

In various embodiments, the polymeric composition is not foamed.

In various embodiments, the polymeric composition is substantially free from any polymers other than the polymer component. As used herein, the term "substantially free" means having a content of less than about 10 parts per million by weight.

*Articles of Manufacture*

In an embodiment, the polymeric composition of this invention can be applied to a cable, a wire, or a conductor as a sheath or insulation layer in known amounts and by known methods, for example, with the equipment and methods described in USP 5,246,783, USP 6,714,707, USP 6,496,629 and USPA 2006/0045439. In an embodiment, the polymeric composition can be applied to a cable, a wire, or a conductor as a jacket. "Jacket" denotes the outer-most coating or layer of a cable or other type of coated conductor. Typically, the polymeric composition is prepared in a reactor-extruder equipped with a cable-coating die and, after the components of the composition are formulated, the composition is extruded over the cable or conductor as the cable or conductor is drawn through the die.

In an embodiment, the polymeric composition forms at least a portion of a jacket on a coaxial cable.

The polymeric composition forms the jacket of a coaxial cable.

DEFINITIONS

As used herein, the term "and/or," when used in a list of two or more items, means that any one of the listed items can be employed by itself or any combination of two or more of the listed items can be employed. For example, if a composition is described as containing components A, B, and/or C, the composition can contain A alone; B alone; C alone; A and B in combination; A and C in combination; B and C in combination; or A, B, and C in combination.

"Wire" means a single strand of conductive metal, e.g., copper or aluminum, or a single strand of optical fiber.

"Cable" means at least one wire or optical fiber within a sheath, e.g., an insulation covering or a protective outer jacket. Typically, a cable is two or more wires or optical fibers bound together, typically in a common insulation covering and/or protective jacket. The individual wires or fibers inside the sheath may be bare, covered or insulated. Combination cables may contain both electrical wires and optical fibers. The cable can be designed for low, medium, and/or high voltage applications. Typical cable designs are illustrated in USP 5,246,783, 6,496,629 and 6,714,707.

"Conductor" denotes one or more wire(s) or fiber(s) for conducting heat, light, and/or electricity. The conductor may be a single-wire/fiber or a multi-wire/fiber and may be in strand form or in tubular form. Non-limiting examples of suitable conductors include metals such as silver, gold, copper, carbon, and aluminum. The conductor may also be optical fiber made from either glass or plastic.

TEST METHODS

*Density*

Density is determined according to ASTM D792.

*Melt Index*

Melt index, or I$_2$, is measured in accordance with ASTM D1238, condition 190 °C / 2.16 kg, and is reported in grams eluted per 10 minutes.

*Tensile Elasticity by DMA (Dynamic Mechanical Analysis)*

Perform dynamic mechanical analysis on 50-mil plaque specimens using a Q800 machine, -80 to 120 °C temperature sweep, single cantilever clamp, temperature ramp at 1 °C/min, amplitude of 20-30 micrometer, frequency 1 Hz. Liquid nitrogen is used to bring the temperature to -80 °C.

*Flexural Modulus*

Analyze samples for flexural modulus using ASTM D790.

*Tensile Strength and Elongation*

Analyze samples for tensile strength and elongation at break using ASTM D638 and type IV dogbone-shaped samples.

MATERIALS

The following materials are employed in the Examples, below.
DFDA-7530 NT is a linear-low-density polyethylene having a melt index (I$_2$) of 0.7 g/10 min., a density of 0.921 g/cm$^3$, and is commercially available from The Dow Chemical Company, Midland, MI, USA.
DOW™ LDPE 132I is a low-density polyethylene having a density of 0.921 g/cm$^3$ and a melt index (I$_2$) of 0.25 g/10 min., which is commercially available from The Dow Chemical Company, Midland, MI, USA.
ENGAGE™ 7447 is a polyolefin elastomer having a density of 0.865 g/cm$^3$ and a melt index (I$_2$) of 5.0 g/10 min., which is commercially available from The Dow Chemical Company, Midland, MI, USA.
ENGAGE™ 8842 is a polyolefin elastomer having a density of 0.857 g/cm$^3$ and a melt index (I$_2$) of 1.0 g/10 min., which is commercially available from The Dow Chemical Company, Midland, MI, USA.
INFUSE™ 9107 is an olefin block copolymer having a density of 0.866 g/cm$^3$ and a melt index (I$_2$) of 1.0 g/10 min., which is commercially available from The Dow Chemical Company, Midland, MI, USA.

EXAMPLES

Prepare six comparative samples (CS1 to CS6) and three inventive samples (IS1 to IS3) according to the formulations provided in Table 1, below. The samples are prepared by weighing and combining the raw materials in a Brabender mixing machine. The samples are mixed using roller blades at 150 °C and 30 rpm after the material is fluxed. The minimum mix time is 5 minutes after the materials have fluxed. After the material is mixed thoroughly, the material is pelletized and transferred to a plaque template of desired thickness. The pelleted material was plaqued in a press machine and then cooled. Plaques are made at the required thicknesses for each test.
Analyze all samples according to the Test Methods provided above. Results are provided in Table 1, below.

**Table 1 - Formulations and Properties of CS1-CS6 and IS1-IS3**

|  | CS1 | CS2 | CS3 | CS4 | CS5 | CS6 | IS1 | IS2 | IS3 |
|---|---|---|---|---|---|---|---|---|---|
| DFDA-7530 (wt%) | 100 | - | 50 | 50 | - | - | - | 50 | 70 |
| LDPE-132i (wt%) | - | 100 | - | - | 50 | 50 | 50 | - | - |
| Engage 8842 (wt%) | - | - | 50 | - | 50 | - | - | - | - |
| Engage 7447EL (wt%) | - | - | - | 50 | - | 50 | - | - | - |
| Infuse 9107 (wt%) | - | - | - | - | - | - | 50 | 50 | 30 |

(continued)

| | CS1 | CS2 | CS3 | CS4 | CS5 | CS6 | IS1 | IS2 | IS3 |
|---|---|---|---|---|---|---|---|---|---|
| Total | 100 | 100 | 100 | 100 | 100 | 100 | 100 | 100 | 100 |
| | | | | | | | | | |
| Tensile Elasticity (G') @ -40C (MPa) | 2105 | 2200 | 902 | 1055 | 798 | 1089 | 865 | 815 | 1153 |
| Tensile Elasticity (G') @ -20C (MPa) | 1526 | 1546 | 398 | 476 | 310 | 464 | 388 | 362 | 745 |
| Tensile Elasticity (G') @ 20C (MPa) | 602 | 588 | 148 | 188 | 77 | 146 | 125 | 118 | 318 |
| Tensile Elasticity (G') @ 40C (MPa) | 330 | 315 | 89 | 109 | 28 | 69 | 70 | 60 | 192 |
| Tensile Strength, avg (psi) | 2215 | 2161 | 788 | 620 | 1049 | 1120 | 1549 | 1787 | 1452 |
| Std. Dev. | 66 | 79 | 292 | 28 | 51 | 65 | 81 | 61 | 261 |
| Elongation, avg (%) | 675 | 575 | 958 | 282 | 827 | 849 | 909 | 981 | 801 |
| Std. Dev. | 34 | 61 | 34 | 74 | 20 | 33 | 33 | 5 | 194 |
| Flex Mod 1% Secant (MPa) | 233 | 222 | 59 | 82 | 42 | 72 | 58 | 69 | 127 |
| Std. Dev. | 7 | 7 | 4 | 1 | 2 | 5 | 2 | 4 | 3 |

Contrary to CS1 and CS2, which do not have a low enough tensile elasticity, and CS3 and CS4, which do not demonstrate high enough tensile strength, IS1 through IS3 demonstrate increased tensile elasticity with acceptable tensile strength and elongation. CS5 and CS6 demonstrate that ENGAGE™ blends can have lower elasticity than typical wire and cable products but not meet the required tensile strength and elongation.

**Claims**

1.  A cable comprising:

    (a) a conductor; and
    (b) an outer jacket,
    wherein the outer jacket is at least partially formed from a polymeric composition,
    wherein the polymeric composition comprises a polymer component and optionally one or more additives,
    wherein the polymer component consists of:

    (i) an ethylene-based polymer selected from a low-density polyethylene, a linear-low-density polyethylene, or combinations thereof, and
    (ii) an olefin block copolymer, wherein the olefin block copolymer has a melt index ($I_2$) in the range of from 0.5 to 1.5 g/10 min. as measured in accordance with ASTM D1238, condition 190 °C/2.16 kg, a tensile elongation of greater than 370%, and a tensile strength greater than 600 psi,

    wherein the polymer component has a tensile elasticity (G') of less than 1,200 MPa when measured at -40 °C using the method as described in the description,
    wherein the polymer component has a tensile elasticity (G') of less than 400 MPa when measured at 20 °C using the method as described in the description,
    wherein the polymer component has a tensile strength greater than 1,000 psi measured using ASTM D638 and type IV dogbone-shaped samples,
    wherein the polymer component has an elongation at break greater than 800 % measured using ASTM D638 and type IV dogbone-shaped samples; and
    wherein the ethylene-based polymer constitutes from 50 to 70 weight percent of the polymer component, wherein the olefin block copolymer constitutes from 30 to 50 weight percent of the polymer component.

2.  The cable of claim 1, wherein the olefin block copolymer is an ethylene/octene block copolymer.

3.  The cable of claim 1, wherein the polymeric composition is thermoplastic.

4. The cable of claim 1, wherein the polymeric composition comprises one or more additives selected from the group consisting of antioxidants, carbon black, flame retardants, processing aids, fillers, pigments or colorants, coupling agents, ultraviolet stabilizers, tackifiers, antistatic agents, plasticizers, lubricants, viscosity control agents, anti-blocking agents, surfactants, extender oils, acid scavengers, and metal deactivators.

5. The cable of claim 1, wherein the ethylene-based polymer has a melt index ($I_2$) of less than 1 g/10 min as measured in accordance with ASTM D1238, condition 190 °C/2.16 kg.

6. The cable of claim 5, wherein the ethylene-based polymer has a density in the range of from 0.915 to 0.925 g/cm$^3$ as determined according to ASTM D792.

7. The cable according to claim 6, wherein the cable is a coaxial cable.

**Patentansprüche**

1. Kabel, umfassend:

   (a) einen Leiter; und
   (b) eine äußere Ummantelung,

   wobei die äußere Ummantelung mindestens teilweise aus einer Polymerzusammensetzung gebildet ist, wobei die Polymerzusammensetzung eine Polymerkomponente und optional ein oder mehrere Additive umfasst,
   wobei die Polymerkomponente besteht aus:

   (i) einem Polymer auf Ethylenbasis, ausgewählt aus Polyethylen niedriger Dichte, linearem Polyethylen niedriger Dichte oder Kombinationen davon, und
   (ii) einem Olefinblockcopolymer, wobei das Olefinblockcopolymer einen Schmelzindex ($I_2$) im Bereich von 0,5 bis 1,5 g/10 min, gemessen gemäß ASTM D1238, Bedingung 190 °C/2,16 kg, eine Zugdehnung von mehr als 370 % und eine Zugfestigkeit von mehr als 600 psi aufweist,

   wobei die Polymerkomponente eine Zugelastizität (G') von weniger als 1.200 MPa aufweist, gemessen bei -40 °C unter Verwendung des in der Beschreibung beschriebenen Verfahrens,
   wobei die Polymerkomponente eine Zugelastizität (G') von weniger als 400 MPa aufweist, gemessen bei 20 °C unter Verwendung des in der Beschreibung beschriebenen Verfahrens,
   wobei die Polymerkomponente eine Zugfestigkeit von mehr als 1.000 psi aufweist, gemessen nach ASTM D638 und unter Verwendung von Proben vom Dogbone-Typ IV,
   wobei die Polymerkomponente eine Bruchdehnung von über 800 % aufweist, gemessen unter Verwendung von ASTM D638 und unter Verwendung von Proben vom Dogbone-Typ IV; und
   wobei das Polymer auf Ethylenbasis 50 bis 70 Gewichtsprozent der Polymerkomponente ausmacht, wobei das Olefinblockcopolymer 30 bis 50 Gewichtsprozent der Polymerkomponente ausmacht.

2. Kabel nach Anspruch 1, wobei das Olefinblockcopolymer ein Ethylen/Octen-Blockcopolymer ist.

3. Kabel nach Anspruch 1, wobei die Polymerzusammensetzung thermoplastisch ist.

4. Kabel nach Anspruch 1, wobei die Polymerzusammensetzung ein oder mehrere Additive umfasst, ausgewählt aus der Gruppe bestehend aus Antioxidantien, Ruß, Flammschutzmitteln, Verarbeitungshilfsmitteln, Füllstoffen, Pigmenten oder Farbstoffen, Haftvermittlern, Ultraviolettstabilisatoren, Klebrigmachern, Antistatika, Weichmachern, Schmiermitteln, Viskositätskontrollmitteln, Antiblockiermitteln, Tensiden, Extenderölen, Säurefängern und Metalldeaktivatoren.

5. Kabel nach Anspruch 1, wobei das Polymer auf Ethylenbasis einen Schmelzindex ($I_2$) von weniger als 1 g/10 min, gemessen nach ASTM D1238, Bedingung 190 °C/2,16 kg, aufweist.

6. Kabel nach Anspruch 5, wobei das Polymer auf Ethylenbasis eine Dichte im Bereich von 0,915 bis 0,925 g/cm$^3$, bestimmt gemäß ASTM D792, aufweist.

**7.** Kabel nach Anspruch 6, wobei das Kabel ein Koaxialkabel ist.

**Revendications**

**1.** Câble comprenant :

(a) un conducteur ; et
(b) une enveloppe extérieure,

dans lequel l'enveloppe extérieure est au moins partiellement formée d'une composition polymère,
dans lequel la composition polymère comprend un constituant polymère et éventuellement un ou plusieurs additifs,
dans lequel le constituant polymère est constitué :

(i) d'un polymère à base d'éthylène choisi parmi un polyéthylène basse densité, un polyéthylène linéaire basse densité, ou des combinaisons de ceux-ci, et
(ii) d'un copolymère à blocs d'oléfine, dans lequel le copolymère à blocs d'oléfine a un indice de fusion ($I_2$) dans la plage allant de 0,5 à 1,5 g/10 min, mesuré conformément à la norme ASTM D1238, à des conditions de 190 °C/2,16 kg, un allongement à la traction supérieur à 370 %, et une résistance à la traction supérieure à 600 psi,

dans lequel le constituant polymère a une élasticité en traction (G') inférieure à 1 200 MPa lorsqu'elle est mesurée à -40 °C à l'aide du procédé décrit dans la description,
dans lequel le constituant polymère a une élasticité en traction (G') inférieure à 400 MPa lorsqu'elle est mesurée à 20 °C à l'aide du procédé décrit dans la description,
dans lequel le constituant polymère a une résistance à la traction supérieure à 1 000 psi, mesurée à l'aide de la norme ASTM D638 et d'échantillons de type IV en forme de bobine,
dans lequel le constituant polymère a un allongement à la rupture supérieur à 800 %, mesuré à l'aide de la norme ASTM D638 et d'échantillons de type IV en forme de bobine ; et
dans lequel le polymère à base d'éthylène constitue 50 à 70 pour cent en poids du constituant polymère, dans lequel le copolymère à blocs d'oléfine constitue 30 à 50 pour cent en poids du constituant polymère.

**2.** Câble selon la revendication 1, dans lequel le copolymère à blocs d'oléfine est un copolymère à blocs d'éthylène/octène.

**3.** Câble selon la revendication 1, dans lequel la composition polymère est thermoplastique.

**4.** Câble selon la revendication 1, dans lequel la composition polymère comprend un ou plusieurs additifs choisis dans le groupe constitué d'antioxydants, noir de carbone, retardateurs de flamme, auxiliaires de traitement, charges, pigments ou colorants, agents de couplage, stabilisateurs d'ultraviolets, agents poisseux, agents antistatiques, plastifiants, lubrifiants, agents de contrôle de la viscosité, agents antiblocage, surfactants, huiles de dilution, piégeurs d'acide et désactivateurs de métaux.

**5.** Câble selon la revendication 1, dans lequel le polymère à base d'éthylène a un indice de fusion ($I_2$) inférieur à 1 g/10 min, mesuré conformément à la norme ASTM D1238, à des conditions de 190 °C/2,16 kg.

**6.** Câble selon la revendication 5, dans lequel le polymère à base d'éthylène a une densité dans la plage allant de 0,915 à 0,925 g/cm$^3$, déterminée selon la norme ASTM D792.

**7.** Câble selon la revendication 6, dans lequel le câble est un câble coaxial.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7608668 B, Colin L. P. Shan, Lonnie Hazlitt
- US 7858706 B
- US 7893166 B
- US 7947793 B
- US 5246783 A
- US 6714707 B
- US 6496629 B
- US 20060045439 A